Europäisches Patentamt

European Patent Office

Office européen des brevets

(11) Numéro de publication: **0 210 930**
**A1**

## DEMANDE DE BREVET EUROPEEN

(21) Numéro de dépôt: 86401688.6

(22) Date de dépôt: 29.07.86

(51) Int. Cl.⁴: **B 60 H 1/14**
**B 62 D 5/06**

(30) Priorité: 30.07.85 FR 8511596

(43) Date de publication de la demande:
04.02.87 Bulletin 87/6

(84) Etats contractants désignés:
DE GB IT SE

(71) Demandeur: VALEO
64 Avenue de la Grande Armée
F-75017 Paris(FR)

(72) Inventeur: Filderman, René
3, rue des Dames Augustines
F-92200 Neuilly-Sur-Seine(FR)

(74) Mandataire: CABINET BONNET-THIRION
95 Boulevard Beaumarchais
F-75003 Paris(FR)

(54) Générateur de chaleur pour véhicule automobile.

(57) Générateur de chaleur pour véhicule automobile équipé d'une installation hydraulique de servo-direction.

Selon l'invention, on complète un circuit de circulation de fluide (15) de l'installation de servo-direction, comprenant une pompe (12) et une valve de servo-direction (18), par une restriction (28) et un échangeur de chaleur (29).

Application au chauffage d'un véhicule automobile.

FIG.1

EP 0 210 930 A1

"Générateur de chaleur pour véhicule automobile"

L'invention se rapporte à un générateur de chaleur pour véhicule automobile, plus particulièrement adapté pour fournir un chauffage d'appoint à l'habitacle du véhicule et/ou atteindre et entretenir une température de fonctionnement suffisante du moteur, même au ralenti.

On connaît des installations de chauffage d'appoint dans les véhicules automobiles, qui consistent à faire circuler un fluide caloporteur dans un étranglement au moyen d'une pompe et à récupérer l'énergie calorifique produite. Un tel système est par exemple décrit dans la demande de brevet français No 2 545 874 ; il utilise l'huile de graissage du moteur entraînée dans un circuit de chauffage spécifique par une pompe spéciale. Ce genre d'installation est compliqué et augmente sensiblement le prix de revient du véhicule car il est nécessaire d'y ajouter des éléments supplémentaires coûteux, notamment la pompe. Selon l'invention ce problème est résolu en utilisant, avec une adaptation peu coûteuse, des moyens équipant généralement un véhicule automobile et remplissant ordinairement une autre fonction ; à savoir l'installation hydraulique de servo-direction.

Dans cet esprit, l'invention se rapporte généralement à un générateur de chaleur pour véhicule automobile équipé d'une installation hydraulique de servo-direction, cette installation comprenant un circuit de circulation de fluide, caractérisé en ce qu'une restriction et un échangeur de chaleur sont insérés dans ledit circuit de circulation de fluide.

L'invention découle d'une analyse faite à l'encontre des concepts généralement admis dans la technique automobile et qui tendent très constamment à éviter de faire jouer des fonctions multiples à des sous-ensembles dits "de sécurité" du véhicule, comme notamment la servo-direction. Elle se fonde sur plusieurs constatations non évidentes, à savoir que, d'une part, la pompe d'un système de servo-direction, notamment du type à "débit constant" a des caractéristiques convenant particulièrement bien pour l'alimentation d'un moyen de chauffage à étranglement, que d'autre part il n'y a pas d'inconvénient majeur à augmenter la température de l'huile du circuit de servo-direction jusqu'à une température suffisante pour faire fonctionner un échangeur et qu'enfin il est possible de concevoir une restriction formant régulateur de pression, insérée dans le circuit d'huile de servo-direction et n'affectant nullement le fonctionnement du distributeur ou "valve" de servo-direction.

Dans cet esprit, l'invention concerne plus précisément un générateur de chaleur selon la définition qui précède associé à une installation de servo-direction du type à débit constant comprenant une pompe entretenant la circulation de fluide dans ledit circuit, caractérisé en ce qu'il comporte une restriction à section variable commandée à l'ouverture par la pression régnant dans ledit circuit.

Ainsi, en l'absence de mouvement des roues, c'est-à-dire lorsque la valve de servo-direction engendre une contrepression minimum dans le circuit de circulation de fluide, l'essentiel des pertes de charge provoquant l'élévation de température du fluide se produit dans la restriction précitée. La fonction principale de l'installation est alors de créer des calories qui sont récupérées par l'échangeur de chaleur. En revanche, dès que l'automobiliste commande le braquage des roues, l'augmentation normale de la chute de pression aux bornes de la valve de servo-direction s'accompagne d'une diminution des pertes de charge dans la restriction variable et par conséquent d'une diminution de la chute de pression aux bornes de celle-ci. Le fonctionnement du système de servo-direction n'est donc nullement perturbé. En outre, la baisse de production de chaleur dans la restriction, dûe à l'augmentation de la section de passage de celle-ci, est pratiquement compensée par un dégagement de chaleur dans la valve de servo-direction. La production de chaleur est donc sensiblement constante quelles que soient les conditions de conduite du véhicule, ceci d'autant plus que l'utilisation intensive de la servo-direction ne représente pas une grande partie du temps de fonctionnement du véhicule.

L'invention sera mieux comprise et d'autres avantages de celle-ci apparaîtront plus clairement à la lumière de la description qui va suivre d'un mode de réalisation d'une installation conforme à son principe, donnée uniquement à titre d'exemple et faite en référence aux dessins schématiques annexés dans lesquels :

- la figure 1 est un schéma bloc d'une installation de servo-direction complétée conformément à l'invention, et

- la figure 2 est une variante de l'installation de la figure 1.

En se reportant au dessin, on a représenté schématiquement un moteur thermique 11 d'un véhicule automobile entraînant mécaniquement la pompe 12 d'une installation hydraulique de servo-direction 13 de ce véhicule automobile. Cette pompe 12 est avantageusement du type volumétrique. L'entraînement de la pompe 12 par le moteur 11 se fait par l'intermédiaire d'une transmission 14, de type connu, dont il sera question plus loin. L'installation de servo-direction 13 comporte classiquement un circuit de circulation de fluide 15 dans lequel circule ledit fluide (de l'huile en l'occurrence) entraîné par la pompe 12 insérée en série dans le circuit. Outre la pompe on trouve successivement insérés dans le même circuit 15, un régulateur de débit 16, un limiteur de pression 17 et le distributeur ou valve de servo-direction 18. La sortie de la valve 18 est reliée à une bâche hydraulique 19 à la pression atmosphérique et l'huile de cette bâche est aspirée par la pompe 12 de sorte qu'une circulation d'huile s'établit au travers des éléments qui viennent d'être cités. Le régulateur de débit 16 se compose essentiellement d'une vanne à trois voies à commande progressive, connue en soi, pilotée pour que le débit à la sortie 16a, c'est-à-dire vers le limiteur de pression 17, soit sensiblement constant. L'excédent d'huile, plus ou moins important suivant la vitesse du moteur, c'est-à-dire suivant le débit de la pompe 12, est évacué par le conduit 20 relié à la bâche 19. Le limiteur de pression 17 est un élément de sécurité ; il transmet normalement intégralement le débit d'huile depuis le régulateur 16 jusqu'à la valve de servo-direction 18. En cas de surpression cependant, un clapet de décharge non représenté s'ouvre et une partie de l'huile s'écoule par le conduit 21 jusqu'à la bâche 19. La valve de servo-direction 18, classique, comporte quatre restrictions variables 22a,22b,23a,23b agencées en pont et dont les sections de passage de fluide sont commandées par la rotation de la colonne de direction du véhicule. Les restrictions 22a et 22b d'une part, et 23a,23b d'autre part, situées dans des branches "parallèles" du pont, s'ouvrent et se ferment dans le même sens. La valve 18 est insérée dans le circuit de circulation de fluide 15 par l'une des diagonales du pont, un vérin d'assistance 25 étant branché dans l'autre diagonale.

Selon l'invention, une restriction 28 et un échangeur de chaleur 29 sont aussi insérés dans le circuit de circulation de fluide 15. La restriction 28 a une section variable commandée à l'ouverture par la pression régnant dans le circuit de circulation de fluide 15. L'échangeur 29 comporte une partie primaire 29a traversée par l'huile du circuit 15 et par celle qui est dérivée par le conduit 20. Autrement dit, la partie primaire 29a est insérée en série dans le circuit 15 entre la valve de servo-direction 18 et la bâche 19 et en aval de la jonction entre le conduit 20 et le circuit 15. Le conduit 21 est également connecté au conduit 20. La partie secondaire 29b de l'échangeur 29 est parcourue par un fluide caloporteur quelconque (eau ou air) pour le chauffage de l'habitacle et/ou le préchauffage du moteur et/ou son maintien en température à bas régime.

La restriction à section variable 28 comporte un corps 30 dans lequel est défini un alésage 31 muni de plusieurs épaulements et abritant un piston 32 mobile en translation. La partie de circuit 15 reliée à la pompe 12 débouche dans l'alésage 31 entre deux épaulements 33, d'égales surfaces, du piston 32. L'alésage 31 comporte en outre une gorge annulaire 34 au fond de laquelle débouche la partie du circuit 15 qui est reliée au régulateur de débit 16. Ainsi, un passage 35 est défini entre l'un des épaulements 33 et la gorge 34, sa section est variable en fonction de la position du piston 32 à l'intérieur de l'alésage. Un moyen de rappel tel qu'un ressort de compression 36 est placé entre une extrémité du piston 32 et l'une des extrémités axiales fermées de l'alésage 31. Il sollicite le piston 32 dans un sens tendant à fermer le passage 35. Par ailleurs, le piston 32 comporte une première surface de travail 37 constituée par un épaulement du piston et formant une paroi mobile d'une chambre annulaire 38 définie entre l'épaulement 37 et un épaulement fixe 39 de l'alésage 31. Par conséquent, la pression admise dans la chambre annulaire 38 engendre sur l'épaulement 37 une force qui s'oppose à celle que le ressort 36 exerce sur le piston. La chambre 38 est reliée par un conduit 40 au circuit de circulation de fluide 15 de sorte que toute élévation de pression dans le circuit 15 engendre sur le piston une force tendant à comprimer le ressort 36 et à ouvrir le passage 35. Par ailleurs, le piston 32 comporte une seconde surface de travail 45 définie par un second épaulement et formant une paroi mobile d'une chambre annulaire 46 définie entre ledit second épaulement et un épaulement fixe 47 de l'alésage 31. Comme précédemment, la seconde surface de travail 45 est donc agencée pour que la pression qui s'y exerce engendre une force s'opposant à celle que le ressort 36 développe sur le piston 32. Cette seconde surface de travail 45 est soumise à une pression représentative de la vitesse du moteur 11. Pour cela, elle est reliée par un conduit 48 au conduit de décharge du régulateur 16, c'est-à-dire au conduit 20 mentionné ci-dessus, en amont d'une légère restriction 49 ménagée dans ce dernier. Un clapet anti-retour 48a est inséré dans le conduit 48. Ainsi, la pression qui est exercée sur l'épaulement 45 est bien représentative de la vitesse du moteur puisque le débit de la pompe 12 dépend de la vitesse de ce moteur et que le débit à la sortie 16a est sensiblement constant. Par conséquent, le débit dans le conduit 20 est représentatif de la vitesse de la pompe donc de celle du moteur. Selon une variante la transmission 14 est un variateur de vitesse à limitation de plage de vitesses. Un variateur de vitesse centrifuge à poulies et courroie, décrit par exemple dans la demande de brevet français No 82 03484 peut avantageusement être utilisé. Comme on le sait, un tel variateur 14 a un rapport de transmission supérieur à 1 lorsque le moteur fonctionne au ralenti et un rapport de transmission inférieur à 1 lorsque le moteur 11 fonctionne à régime normal ou élevé. Cette réduction de la plage de vitesses de la pompe est intéressante car elle permet de limiter les dimensions de la pompe et aussi d'obtenir une quantité de chaleur suffisante aux basses vitesses du moteur.

Les deux portions extrêmes fermées de l'alésage 31 forment avec les extrémités correspondantes du piston 32 des enceintes de récupération des fuites 50,51 (le ressort 36 est logé dans l'enceinte 50) reliées à la bâche par des conduits 52,53, respectivement. Par ailleurs, l'installation est complétée par des moyens de commande thermostatique, thermiquement couplés à un élément quelconque recevant de la chaleur ainsi produite et agencés pour actionner à l'ouverture la restriction 28 à section variable. Dans l'exemple représenté, ces moyens de commande thermostatique sont du type tout ou rien et simplement constitués par un robinet thermostatique 54 inséré en série dans un collecteur de fuite agencé entre la première chambre annulaire 38 et la bâche 19. Plus précisément, ce robinet 54 est ici simplement inséré dans le conduit 53. Le fonctionnement de l'ensemble qui vient d'être décrit est le suivant.

Lorsque le moteur 11 fonctionne, la pompe 12 est entraînée et injecte un certain débit d'huile dans le circuit 15, ce débit devenant constant vis-à-vis de la valve de servo-direction 18, à la sortie du régulateur 16. Si la valve 18 n'est pas actionnée, la pression dans l'ensemble du circuit 15 entre la sortie de pompe et la bâche dépend essentiellement des pertes de charge créées au niveau du passage 35. L'huile en circulation dans le circuit 15, formant fluide caloporteur, s'échauffe donc à son passage dans la restriction et cède sa chaleur à l'échangeur 29 après avoir traversé pour partie la valve de servo-direction 18 et pour partie le conduit de décharge 20. Si la valve de servo-direction 18 est actionnée par l'automobiliste, il en résulte l'apparition d'une contrepression entre ladite valve et la sortie de pompe 12. Cette contrepression se communique à la chambre annulaire 38, ce qui a pour conséquence d'ouvrir davantage le passage 35. Ainsi, l'augmentation de la chute de pression aux bornes de la valve de servo-direction 18 s'accompagne d'une diminution de la chute de pression aux bornes de la restriction 28 et la pression en sortie de la pompe 12 ou ce qui revient au même, à l'entrée de la restriction 28 est ramenée au niveau qu'elle avait avant toute action sur la valve de servo-direction 18. Le fonctionnement de la servo-direction n'est donc nullement perturbé par la présence de la restriction 28, la seule différence résidant dans la température de l'huile circulant dans le circuit 15. Par ailleurs, si la vitesse du moteur augmente le débit d'huile à la sortie de la pompe 12 augmente également ; il s'en suit une perte de charge plus importante au niveau du passage 35 et par conséquent un dégagement de chaleur qui pourrait devenir excessif. C'est pourquoi la pression transmise à la chambre annulaire 46 et qui dépend du débit dans le conduit 20 agit pour augmenter la section du passage 35 et rendre ainsi la production de chaleur relativement indépendante de la vitesse du moteur.

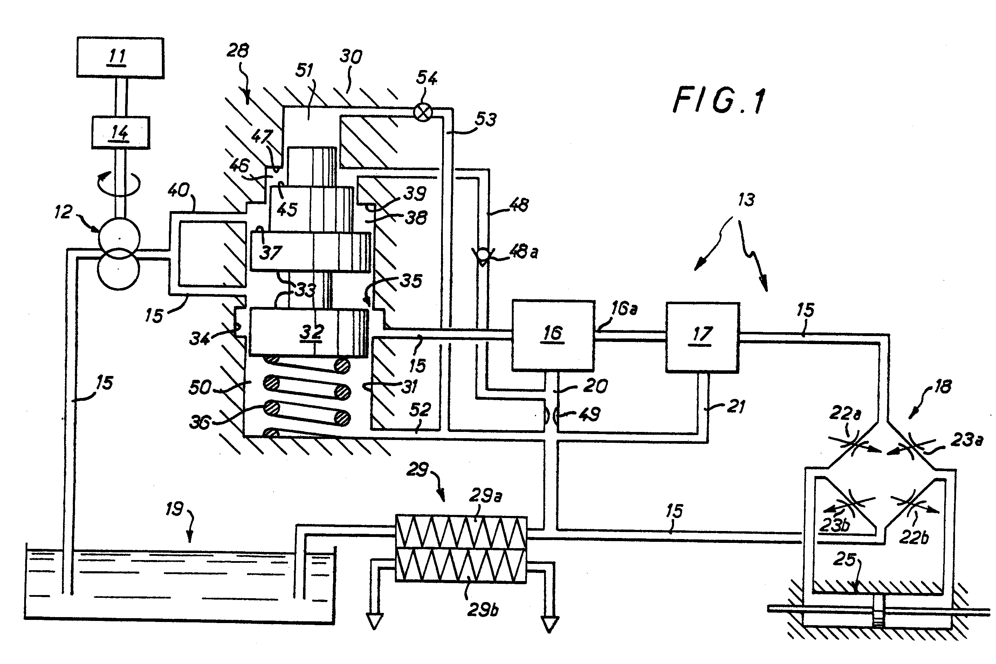

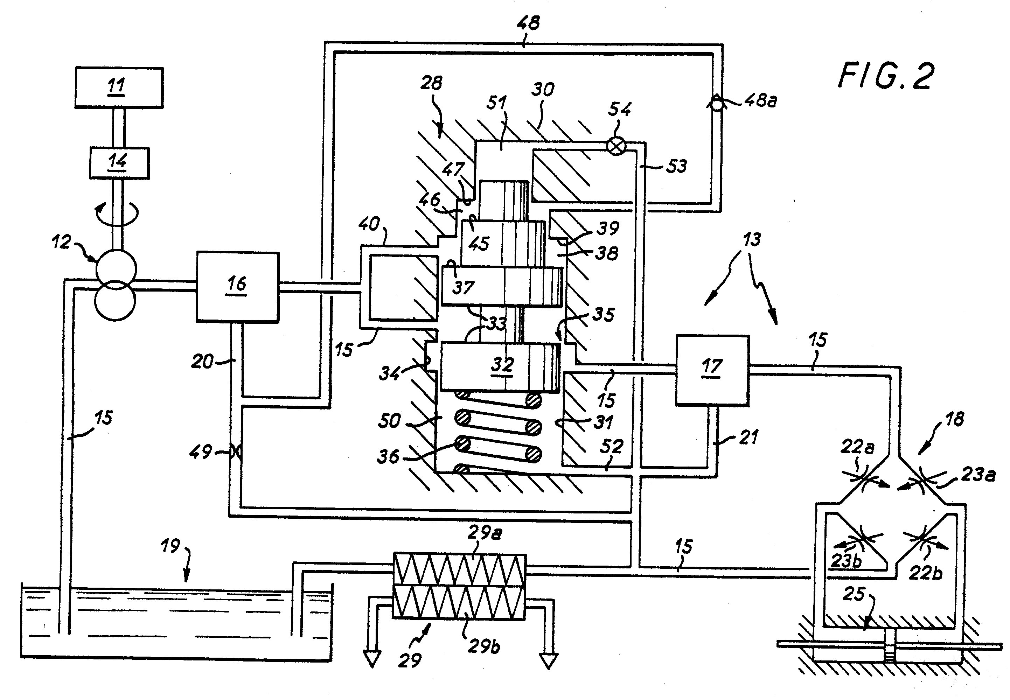

Sur la figure 2, les éléments de structures analogues portent les mêmes références numériques et ne seront pas décrits à nouveau. On voit que cette installation se distingue de celle de la figure 1 uniquement par le fait que la restriction 28 est intercalée cette fois en aval du régulateur de débit 16. Le fonctionnement est sensiblement le même avec cette différence que la production de chaleur ne se fait plus uniquement dans la restriction 28 qui n'est plus parcourue par la totalité du débit de la pompe. En effet, la partie excédentaire du débit de la pompe est déviée par le conduit 20. Cependant, comme le fluide circulant dans le régulateur 16 est mis sous pression par la restriction 28, il se produit une chute de pression plus importante dans le régulateur 16 pour le débit excédentaire retournant directement à la bâche. Cette chute de pression plus importante est donc génératrice de chaleur. Les deux débits à température élevée, celui passant par la valve 18 et celui circulant dans le conduit 20 se réunissent à l'entrée de l'échangeur 29 et donc la totalité de la chaleur produite peut être récupérée. Dans cette variante, la chambre annulaire 46 est conservée pour qu'une pression représentative de la vitesse de rotation de la pompe, produite par la restriction 49, puisse agir sur l'épaulement 45 et contribuer à l'ouverture du passage 35. Les modes de réalisation des figures 1 et 2 donnent des résultats équivalents, l'un ou l'autre sera choisi en considération des opportunités de construction. On peut aussi envisager de simplifier le mode de réalisation de la figure 2 en supprimant la chambre 46 et le conduit 48. Dans tous les cas, la valve 18, le vérin 25 ainsi que les conduits du circuit 15 les plus exposés à l'air ambiant, pourront avantageusement être calorifugés.

Lorsque la température de l'huile en circulation atteint une valeur maximum souhaitée, de préférence réglable de l'habitacle, la vanne thermostatique 54 se ferme et les fuites qui s'accumulent dans l'enceinte 51 repoussent complétement le piston 32 jusqu'à ouverture maximum du passage 35, le clapet antiretour 48a s'opposant en effet à l'évacuation de ces fuites vers la bâche 19 par les conduits 48 et 20. Il n'y a plus alors de restriction entre la pompe 12 et la valve de servo-direction 18 qui fonctionne alors exactement comme dans une installation de servo-direction classique sans dispositif additionnel de production de chaleur. Cet agencement simple fonctionne par tout ou rien entre deux températures de consigne voisines. On pourrait aussi utiliser une vanne 54 à ouverture et fermeture progressive commandée par une boucle d'asservissement. Enfin, la vanne 54 pourra également, par tout moyen annexe, par exemple manuel, être maintenue fermée en permanence pendant les périodes de l'année où le fonctionnement en générateur de chaleur n'est pas nécessaire.

Le fluide caloporteur secondaire de l'échangeur 29 pourra être exploité de différentes manières. On pourra par exemple privilégier au démarrage le chauffage de l'habitacle et commuter ensuite le transfert des calories vers le circuit de refroidissement du moteur. A partir de ce moment, on obtient une régulation de la température du circuit de direction assistée et cette régulation a pour conséquence inattendue d'améliorer le fonctionnement de la servo-direction.

REVENDICATIONS

1. Générateur de chaleur pour véhicule automobile à moteur, équipé d'une installation hydraulique de servo-direction, cette installation comprenant un circuit de circulation de fluide (14), caractérisé en ce qu'une restriction (28) et un échangeur de chaleur (29) sont insérés dans le dit circuit de circulation de fluide.

2. Générateur de chaleur selon la revendication 1, associé à une installation de servo-direction du type à débit constant comprenant une pompe (12) entretenant la circulation de fluide dans ledit circuit, caractérisé en ce qu'il comporte une restriction à section variable (28) commandée à l'ouverture par la pression régnant dans ledit circuit (15).

3. Générateur de chaleur selon la revendication 2, caractérisé en ce que ladite restriction à section variable comporte un piston mobile (32) dans un alésage (31) et commandant une variation de section d'un passage (35) de fluide dudit circuit de circulation de fluide, en ce qu'un moyen de rappel (36) tel qu'un ressort sollicite ledit piston dans un sens tendant à réduire ladite section dudit passage et en ce que ledit piston comporte une première surface de travail (37) soumise à la pression régnant dans ledit circuit de circulation de fluide (15), cette première surface de travail étant agencée pour que ladite pression y engendre une force s'opposant à celle que ledit moyen de rappel développe sur ledit piston.

4. Générateur de chaleur selon la revendication 3, caractérisé en ce que ladite première surface de travail (37) est constituée par un premier épaulement dudit piston formant une paroi mobile d'une chambre annulaire (38) définie entre ledit premier épaulement et un épaulement fixe (39) dudit alésage, cette chambre annulaire étant reliée audit circuit hydraulique.

5. Générateur de chaleur selon la revendication 3 ou 4, caractérisé en ce que ledit piston comporte une seconde surface de travail (45) soumise à une pression représentative de la vitesse d'entraînement de la pompe, cette seconde surface étant agencée pour que ladite pression représentative y engendre une force s'opposant à celle que ledit moyen de rappel développe sur ledit piston.

6. Générateur de chaleur selon la revendication 5, caractérisé en ce que ladite seconde surface de travail est un second épaulement dudit piston formant une paroi mobile d'une chambre annulaire (46) définie entre ledit second épaulement et un épaulement fixe (47) dudit alésage, cette chambre annulaire étant reliée à une sortie de dérivation d'un régulateur de débit (16) inséré dans ledit circuit de circulation de fluide.

7. Générateur de chaleur selon l'une des revendications précédentes, caractérisé en ce qu'il comporte des moyens de commande thermostatique (54), actionnant à l'ouverture ladite restriction à section variable.

8. Générateur de chaleur selon l'ensemble des revendications 4 et 7, caractérisé en ce que lesdits moyens de commande thermostatique sont du type tout ou rien et comportent notamment un robinet thermostatique (54) ou analogue placé dans un collecteur de fuite (51,53) agencé entre ladite première chambre annulaire (38) et une bâche (19) dudit circuit de circulation de fluide.

9. Générateur de chaleur selon l'une des revendications 2 à 8, caractérisé en ce que ladite pompe (12) est entraînée par ledit moteur avec interposition d'un variateur de vitesses (14) à limitation de plage de vitesses, comme par exemple un variateur de vitesses centrifuge à poulies et courroie, connu en soi.

10. Générateur de chaleur selon l'une des revendications précédentes, caractérisé en ce que certains éléments au moins de ladite installation de servo-direction sont calorifugés.

11. Générateur de chaleur selon l'une des revendications 2 à 10, caractérisé en ce que ladite restriction (28) est placée entre ladite pompe (12) et un régulateur de débit (16) alimentant une valve de servo-direction (18).

12. Générateur de chaleur selon l'une des revendications 2 à 10, caractérisé en ce que ladite restriction (28) est placée entre un régulateur de débit (16) alimenté par ladite pompe (12) et une valve de servo-direction (18).

FIG.1

0210930

FIG.2

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl.4) |
|---|---|---|---|
| X | GB-A-2 054 825  (K.H.D.)<br>* En entier * | 1 | B 60 H  1/14<br>B 62 D  5/06 |
| A | | 2,7 | |
| | --- | | |
| X | FR-A-2 468 485  (K.H.D.)<br>* Figure * | 1 | |
| | --- | | |
| Y | EP-A-0 090 129  (T.R.W.)<br>* Résumé; figures 1,3 * | 1-3 | |
| | --- | | |
| Y | GB-A-2 083 201  (K.H.D.)<br>* En entier * | 1-3 | |
| | --- | | |
| A | DE-A-2 539 565<br>(MASSEY-FERGUSON) | | DOMAINES TECHNIQUES RECHERCHES (Int. Cl.4) |
| | --- | | B 60 H |
| A | FR-A-2 546 983  (BOSCH) | | B 62 D |
| | --- | | |
| A | US-A-3 703 186  (BREWER) | | |
| | --- | | |
| A | FR-A-2 536 346  (ORENSTEIN) | | |
| | ----- | | |

Le présent rapport de recherche a été établi pour toutes les revendications

| Lieu de la recherche | Date d'achevement de la recherche | Examinateur |
|---|---|---|
| LA HAYE | 06-10-1986 | LINTZ C.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82